(19) Europäisches Patentamt

European Patent Office

Office européen des brevets

(11) Veröffentlichungsnummer : **0 075 195**
**B1**

(12) **EUROPÄISCHE PATENTSCHRIFT**

(45) Veröffentlichungstag der Patentschrift :
20.08.86

(21) Anmeldenummer : 82108275.7

(22) Anmeldetag : 08.09.82

(51) Int. Cl.⁴ : **G 01 F 1/66, G 01 P 5/00**

(54) **Verfahren und Gerät zur Strömungsmessung nach der Ultraschall-Puls-Doppler-Methode.**

(30) Priorität : 21.09.81 DE 3137466

(43) Veröffentlichungstag der Anmeldung :
30.03.83 Patentblatt 83/13

(45) Bekanntmachung des Hinweises auf die Patenterteilung : 20.08.86 Patentblatt 86/34

(84) Benannte Vertragsstaaten :
AT DE FR NL

(56) Entgegenhaltungen :
FR-A- 2 226 663
US-A- 3 498 290
"Ultrasound; its applications in medicine and biology",Elsevier Scientific Publishing Co., Amsterdam,
Oxford, N.Y., (1978), Kap. 3, S. 195-219

(73) Patentinhaber : Siemens Aktiengesellschaft Berlin
und München
Wittelsbacherplatz 2
D-8000 München 2 (DE)

(72) Erfinder : Hassler, Dieter
Flurweg 3
D-8521 Uttenreuth (DE)

## Beschreibung

Die Erfindung bezieht sich auf ein Verfahren zur Strömungsmessung nach der Ultraschall-Puls-Doppler-Methode gemäß Oberbegriff des Patentanspruchs 1 sowie auf ein Gerät zur Durchführung eines solchen Verfahrens. Ein solches Verfahren und ein solches Gerät ist aus dem Buch « Ultrasound : Its Applications in Medicine and Biology », Vol 3 of « Methods and Phenomena : Their Applications in Science and Technology », Elsevier Scientific Publishing Co., Amsterdam, Oxford, New York, 1978, Chapter III, bekannt.

Verfahren und Geräte dieser Art gewinnen insbesondere für die Kardiologie immer mehr Bedeutung. Hier soll aus einem kleinen Signaleinzugsgebiet in wählbarer Körpertiefe die Blutströmung ermittelt werden. Die Brauchbarkeit der Ultraschall-Doppler-Technik für die Kardiologie ist allerdings immer noch recht eingeschränkt ; aus energetischen Gründen können nämlich die Parameter (z. B. Sendefrequenz u. a.) nicht so gewählt werden, daß im vorgegebenen Tiefenbereich auch noch hohe Geschwindigkeiten der Strömung eindeutig erfaßt werden. Erfahrungsgemäß müßte man um den Faktor zwei höhere Strömungsgeschwindigkeiten messen können, um den praktischen Bedürfnissen bei der Blutströmungsmessung an Lebewesen, insbesondere im kardiologischen Bereich, gerecht werden zu können. Das Problem einer eindeutigen Messung ist in erster Linie auf die Überlagerung von Spektren zurückzuführen. Es sind zwar bereits theoretische Lösungen des Problems bekannt ; diese Lösungen arbeiten mit kodierten Dauerschallsignalen in Verbindung mit einer Korrelationstechnik. Dies erfordert aber das Abgehen von der bekannten Pulstechnik, was nachteilig ist, weil sich der technische Aufwand erhöht und weil eine Verbindung der Doppler-Technik mit der B-Scan-Technik erschwert wird.

Aus der FR-A 2 226 663 und der US-A 3,498,290 sind Ultraschall-Doppler-Geräte, insbesondere nach der Impulsmethode, bekannt, die aber keine Lösung für das Problem der überlagerten Spektren anbieten. In der FR-A 2 226 663 geht es darum, die Geschwindigkeit strömender Medien zu messen. Dazu wird die Doppler-Methode angewandt, wobei Mittel zur Bestimmung des Schwerpunkts des Doppler-Spektrums und Mittel zur Bestimmung des Energieinhalts dieses Spektrums vorgesehen sind. Hierzu werden Frequenzfilter verwendet. Es handelt sich also um eine konventionelle Art der Geschwindigkeitsmessung, ohne daß auf eine Spektralanalyse oder den Fall überlappender Spektren eingegangen wird. In der US-A 3,493,290 geht es dagegen um ein Ultraschall-Puls-Doppler-Gerät, das zur Messung des Volumenstroms — nicht der Strömungsgeschwindigkeit — eingesetzt wird. Der Überlappung der Doppler-Spektren wird dabei keine Beachtung geschenkt. Bei diesem Gerät wird auch ein Spektralanalysator verwendet. Dieser ist jedoch — anders als bei der Erfindung — nicht in der Lage, das zu analysierende Dopplerspektrum in kleinen Schritten abzutasten. Er dient dazu, die wahre Frequenz der nach dem Dopplerprinzip verschobenen reflektierten Ultraschall-Impulse festzustellen. Daß ein solches Gerät vorhanden ist, wird bei der vorliegenden Erfindung vorausgesetzt.

Aufgabe vorliegender Erfindung ist es, ein Verfahren und ein Gerät der eingangs genannten Art anzugeben, mit dem sich ohne Abgehen von der bekannten Puls-Doppler-Technik die Obergrenze der Strömungsmessung, bis zu der noch eindeutig meßbar ist, erhöhen läßt.

Die Aufgabe wird mit einem Verfahren gelöst, das die im kennzeichnenden Teil des Anspruchs 1 aufgezählten Verfahrensschritte umfaßt.

Ein Gerät zur Durchführung dieses Verfahrens ist durch die Merkmale des Anspruchs 13 gekennzeichnet.

Die Erfindung geht von der folgenden Erkenntnis aus : Dopplerspektren ein und desselben Grundgeschehens (Strömung im Signaleinzugsbereich) finden sich im kammartigen Spektrum eines Puls-Doppler-Geräts vielfach und in ähnlicher Form nebeneinander. Wird bei einem konventionellen Puls-Doppler-Gerät die Geschwindigkeitsnachweisgrenze überschritten, überlagern sich die Doppler-spektren von Vor- und Rückströmung oder, falls keine Rückströmung vorliegt, die Teilspektren der Vorströmung, so daß ein kaum auswertbares Gemisch von Spektren entsteht. Die Überlagerung oder Überlappung der einzelnen Spektren fällt in unterschiedlichen Frequenzlagen des kammartigen Spektrums unterschiedlich aus. Diese Tatsache nutzt die Erfindung aus. Wird also, wie die Erfindung vorschlägt, eine gleichzeitige Spektralanalyse der überlagerten Dopplersignale in zwei Frequenzlagen vorgenommen, so ergibt sich ein Meßergebnis, das mittels des Kompensationsprinzips zur Trennung ausgenutzt werden kann, sofern die Ähnlichkeitsgesetze beachtet werden. Die Erfindung führt zu einer Trennung von Hin- und Rückfluß-Signalen bei noch vertretbaren Fehlern durch endliche Meßzeiten. Die Obergrenze der Strömungsmessung wird dabei beträchtlich erhöht (etwa um den Faktor $5/3 = 1,67$), wobei von der konventionellen Puls-Doppler-Technik nicht abgegegangen wird.

Weitere Vorteile und Einzelheiten der Erfindung ergeben sich aus der nachfolgenden Beschreibung eines Ausführungsbeispiels anhand der Zeichnung und in Verbindung mit den Unteransprüchen.

Es zeigen :

Figur 1 ein Diagramm, das für zwei unterschiedliche Frequenzlagen die Ähnlichkeitsgesetze zwischen den Leitstungsspektren einer Strömungsrichtung veranschaulicht,

Figur 2 das Prinzip einer kompensatorischen Mehrbereichs-Frequenzanalyse für überlagerten Hin- und Rückfluß,

Figur 3 das Prinzip der Figur 2, angewendet auf die Randbereiche der Dopplerspektren,

Figur 4 das Prinzip der Aufaddition des isolierten Spektrums,

2

Figur 5 ein Ausführungsbeispiel für eine kompensatorische Mehrbereichs-Frequenzanalyse im Prinzipschaltbild,

Figur 6 einen Signal-Synthetisierer zur Erzeugung eines künstlichen Dopplersignals mit der Leistungsdichtefunktion entsprechend dem Frequenzanalyseergebnis bei überlagerten Spektren.

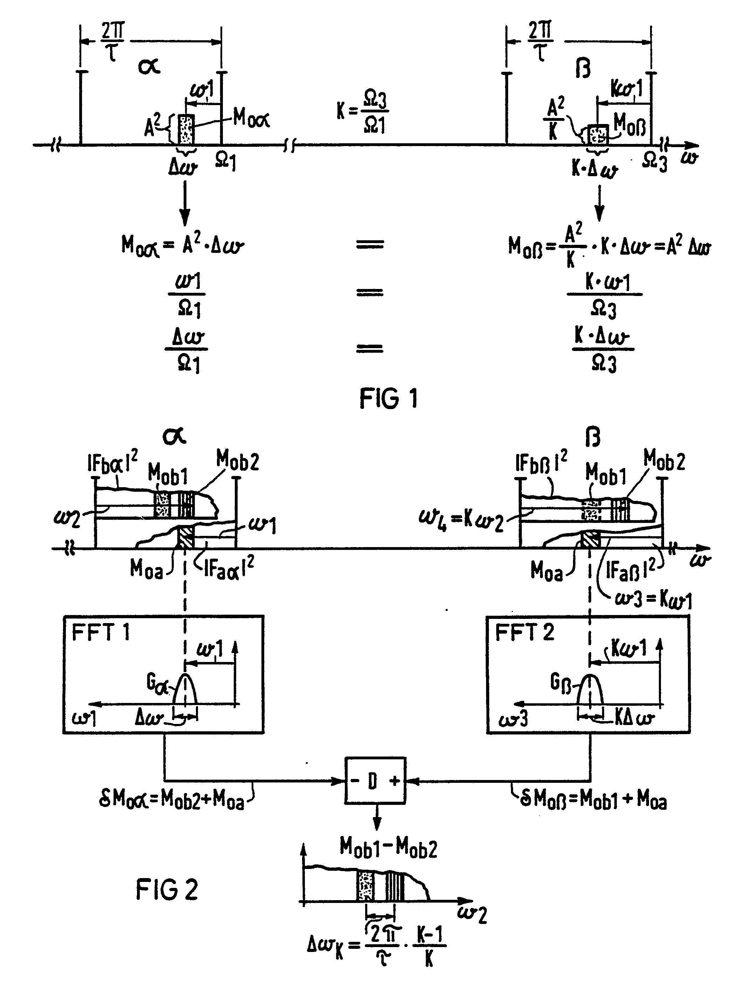

In der Figur 1 sind zwei Dopplerspektren in zwei unterschiedlichen Frequenzlagen $\alpha$ und $\beta$ ausschnittsvergrössert dargestellt. Die unterschiedliche Lage im Spektrum entspricht der gleichzeitigen Untersuchung des Signaleinzugsgebiets mit verschiedenen Sendekreisfrequenzen $\Omega_1$ und $\Omega_3$. Die gepunkteten Rechteckflächen repräsentieren gleiche Leitstungen $M_{0\alpha}$ und $M_{0\beta}$. Die Flächen sind in den Mittenfrequenzen $\omega_1$ bzw. $K \cdot \omega_1$ und in ihren Bandbreiten $\Delta\omega$, bzw. $K \cdot \Delta\omega$ entsprechend dem Dehnungsfaktor $K = \Omega_3/\Omega_1$ unterschiedlich. Dasselbe gilt für die normierten Mittenfrequenzen

$$\frac{\omega_1}{\Omega_1} \quad \text{bzw.} \quad \frac{K \cdot \omega_1}{\Omega_3}$$

und für die normierten Bandbreiten

$$\frac{\Delta\omega}{\Omega_1} \quad \text{bzw.} \quad \frac{K \cdot \Delta\omega}{\Omega_3}.$$

Eine bezüglich K umgekehrt proportionale Beziehung soll zwischen den Leistungsdichten $A^2$ bzw. $A^2/K$ der Leistungsspektren vorhanden sein, so daß Leistungs- bzw. Flächengleichheit $M_{0\alpha} = M_{0\beta}$ gegeben ist. Damit sind durch Figur 1 die für beide Leistungsspektren gültigen Ähnlichkeitsgesetze definiert. Ähnliche Leistungsspektren haben jedoch nicht gleichzeitig auch identische Zeitfunktionen $f_1(t)$ bzw. $f_3(t)$ des Dopplersignals zur Folge. Diese sind im allgemeinen unterschiedlich.

Die Figur 2 zeigt in Anwendung der in der Figur 1 veranschaulichten Ähnlichkeitsgesetze das Prinzip einer kompensatorischen Mehrbereichs-Frequenzanalyse für überlagerten Hin- und Rückfluß. In der Figur 2 sind im Diagramm oben in den beiden Frequenzlagen $\alpha$ und $\beta$ je zwei sich überlagernde Teilspektren dargestellt. Das Spektrum $|F_{b\alpha}|^2$ aus der Lage $\alpha$ und das Spektrum $|F_{b\beta}|^2$ aus der Lage $\beta$ stammen dabei vom Hinfluß. Die Spektren $|F_{a\alpha}|^2$ der Lage $\alpha$ und $|F_{a\beta}|^2$ der Lage $\beta$ resultieren entsprechend aus dem Rückfluß. Mittels zweier FFT-Spektralanalysatoren FFT1 und FFT2 mit den Filterfunktionen $G_\alpha$ und $G_\beta$ mit der variablen Mittenfrequenz $\omega_1$ bzw. $K \cdot \omega_1$ und den Durchlaßbandbreiten $\Delta\omega$ bzw. $K \cdot \Delta\omega$ werden in den beiden Frequenzlagen $\alpha$ und $\beta$ aus den Spektren des Hin- und Rückflusses unter Berücksichtigung der Ähnlichleitsgesetze die Ausschnittsleistungen (= Ausschnittsmomente O. Ordnung) herausgefiltert. Im Falle des Spektralanalysators FFT1 erhält man die Ausschnittsleistung $\delta M_{0\alpha} = M_{0b2} + M_{0a}$. Der Spektralanalysator FFT2 liefert die Ausschnittsleistung $\delta M_{0\beta} = M_{0b1} + M_{0a}$. Nach den vorstehend abgehandelten Ähnlichkeitsgesetzen sind die Leitsungsausschnitte $M_{0b1}$, $M_{0b2}$ und $M_{0a}$ für beide Frequenzlagen $\alpha$ und $\beta$ gleich, was im Diagram in der Figur 2 oben dargestellt ist. Werden die Ausgangssignale der beiden Spektralanalysatoren FFT1 und FFT2 voneinander subtrahiert (in einem Subtrahierglied D), so erhält man als Ergebnis die Leistungsdifferenz $M_{0b1} — M_{0b2}$ aus dem Spektrum des Hinflusses. Der Leistungsanteil aus dem Rückfluß oder Gegenfluß ist hingegen eliminiert. Die Anteile der erhaltenen Leistungsdifferenz liegen, bezogen auf $\omega_2$, im Frequenzabstand

$$\Delta\omega_K = \frac{2\pi}{\tau} \cdot \frac{K - 1}{K}$$

auseinander, wie in der Figur 2 unten angedeutet ist.

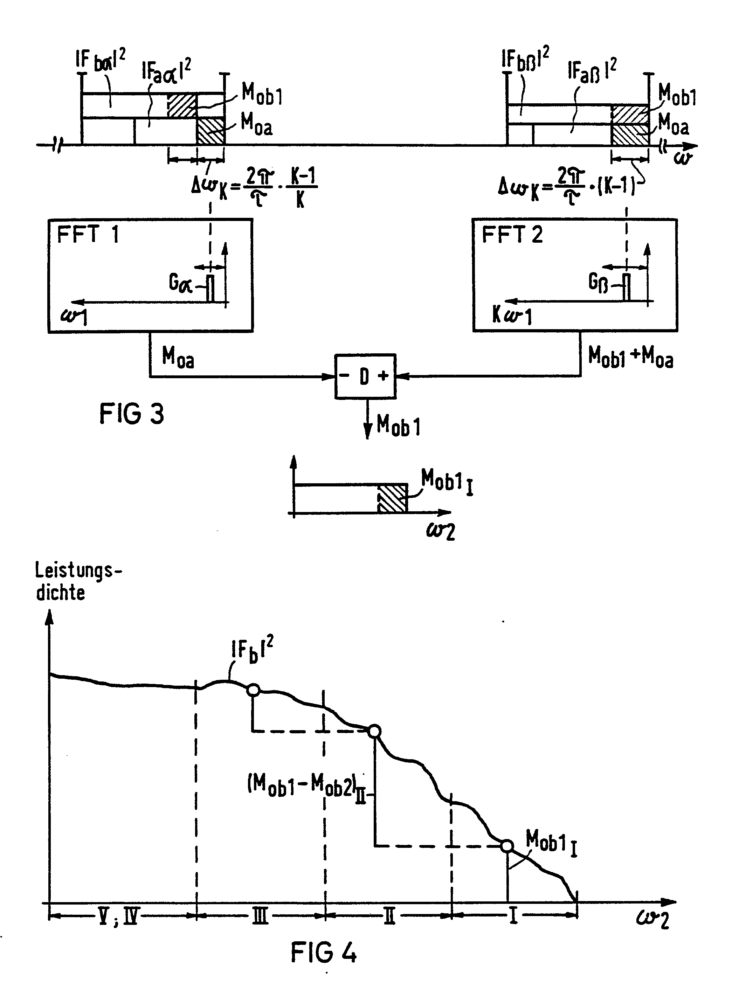

Die kompensatorische Mehrbereichs-Frequenzanalyse erlaubt also die Unterdrückung von Signalen einer Flußrichtung. Das Spektrum der nicht unterdrückten Flußrichtung, d. h. das isolierte Spektrum, erhält man in einfacher Weise unter Anwendung des Prinzips der Figur 4 durch Aufaddition nacheinander in Schritten I, II etc. erhaltener Werte, beginnend mit dem Schritt I vom Rand der Spektren, bei sich schrittweise änderndem $\omega_1$ bzw. $K \cdot \omega_1$ der Spektralanalysatoren FFT1 und FFT2.

Die « Randwertanalyse » ist in der Figur 3 dargestellt. Im Schritt I liefert der Spektralanalysator FFT1 an seinem Ausgang lediglich einen Leistungsanteil $M_{0a}$, da ja das Spektrum $|F_{b\alpha}|^2$ in diesem Frequenzrandbereich bei der für den Hinfluß maximal erlaubten Bandbreite Null ist. Der Spektralanalysator FFT2 liefert hingegen im Randbereich in der Frequenzlage $K\omega_1$ unter Berücksichtigung der Ähnlichkeitsgesetze das Ergebnis $M_{0b1} + M_{0a}$. Nach Differenzbildung im Differenzbildner D ergibt sich die Leistung $M_{0b1}$. Beginnend von dieser Randleistung des Randanalysierschrittes I werden nun entsprechend dem Diagramm der Figur 4 die sich ergebende Differenzleistung $M_{0b1} — M_{0b2}$ der Figur 2, d. h. bei Durchführung entsprechend weiterer Analysenschritte II, III, IV, etc. weitere Differenzleistungen aufaddiert. Es ergibt sich dann das in der Figur 4 dargestellte isolierte Leistungsspektrum $|F_b|^2$ des Hinflusses. Das Spektrum des Rückflusses $|F_a|^2$ kann in ähnlicher Weise, beginnend vom linksseitigen Randwert, und durch entsprechende Differenzbildung mit den Leistungswerten des Hinflußspektrums ; gemessen werden.

3

Der vorstehend beschriebene Sachverhalt wird im nachfolgenden durch eine mathematische Leistungsbetrachtung noch vertieft :

Entsprechend den Figuren 2 und 3 können in den unterschiedlichen Frequenzlagen $\alpha$ und $\beta$ also durch einen Einseitenbandempfänger die folgenden Spektren empfangen werden :

$$\text{niedrige Frequenzlage } (F_{a\alpha}(\omega_1) + F_{b\alpha}(\omega_2)) \tag{1}$$
$$\text{höhere Frequenzlage } (F_{a\beta}(\omega_3) + F_{b\beta}(\omega_4)) \tag{2}$$

Diese überlagerten Spektren werden nun einer Filterung in Kombination mit einer Leistungsmessung unterworfen. Die Filterfunktionen $G_\alpha$ und $G_\beta$ sind so gewählt, daß gemäß den vorausgesetzten Ähnlichkeitsbedingungen einander entsprechende Spektralanteile in $F_{a\alpha}$ und $F_{a\beta}$ gleichermaßen erfaßt werden. Man stelle sich also vor, durch Einseitenbandtechnik liegen die beiden Frequenzlagen $\alpha$ und $\beta$ z. B. mit Bezug auf $\Omega_1$ bzw. $\Omega_3$ demoduliert gleichzeitig vor. Zwei Spektralanalysatoren bilden die Leistungen aus der Bandbreite $\Delta\omega$ bei der Frequenz $\omega_1$ bzw. $K \cdot \Delta\omega$ bei der Frequenz $K \cdot \omega_1$. Man erhält dann die Leistungen bzw. Ausschnittsmomente 0. Ordnung mit den Empfangsempfindlichkeiten $\alpha$ und $\beta$ für diese Bereiche :

$$\delta M_{0\alpha} = \alpha \int_0^{\frac{2\pi}{\tau}} | F_{a\alpha}(\omega_1) \cdot G_\alpha |^2 \, d\omega_1 + \alpha \int_0^{\frac{2\pi}{\tau}} | F_b(\omega_2) \cdot G_\alpha |^2 \, d\omega_2 \tag{3}$$

$$\delta M_{0\beta} = \beta \int_0^{\frac{2\pi}{\tau}} | F_{a\beta}(\omega_3) \cdot G_\beta |^2 \, d\omega_3 + \beta \int_0^{\frac{2\pi}{\tau}} | F_{b\beta}(\omega_4) \cdot G_\beta |^2 \, d\omega_4 \tag{4}$$

$\alpha$, $\beta$ sind hier Frequenzkorrekturfaktoren.

Mit $|G_\alpha| = 1$ bzw. $|G_\beta| = 1$ im Durchlaßbereich ergibt sich dann bei kleinem $\Delta\omega$ und mit der Abkürzung

$$| F_{a\alpha}(\omega_1) \cdot G_\alpha |^2 = A_\alpha^2 ,$$
$$| F_{b\alpha}(\omega_2) \cdot G_\alpha |^2 = B_\alpha^2 ,$$
$$| F_{a\beta}(\omega_3) \cdot G_\beta |^2 = A_\beta^2 ,$$
$$| F_{b\beta}(\omega_4) \cdot G_\beta |^2 = B_\beta^2 :$$

$$\delta M_{0\alpha} = \alpha A_{\alpha;(\omega_1)}^2 \, \Delta\omega + \alpha B_{\alpha;(\omega_2)}^2 \, \Delta\omega \tag{5}$$
$$= \quad M_{0\alpha} \quad + \quad M_{ob2}$$

und mit der Abkürzung

$$A_{\beta;(K\,\omega_1)}^2 = \frac{A_{\alpha;(\omega_1)}^2}{K} \tag{6}$$

$$\delta M_{0\beta} = \beta A_{\alpha;(\omega_1)}^2 \, \Delta\omega + \beta B_{\beta;\left(\frac{2\pi}{\tau} - K\omega_1\right)}^2 \cdot K \, \Delta\omega \tag{7}$$
$$= \quad M_{0\alpha} \quad + \quad M_{ob1}$$

Aus den Gleichungen (5) und (7) ergibt sich dann mit folgender Zwischenrechnung

$$\delta M_{0\alpha} - \frac{\alpha}{\beta} \delta M_{0\beta} = \alpha \, \Delta\omega K \left( \frac{1}{K} \cdot B_{\alpha;(\omega_2)}^2 - B_{\beta;\left(\frac{2\pi}{\tau} - K\omega_1\right)}^2 \right) \tag{8}$$

wegen

$$B_{\beta;(K\omega_2)}^2 = \frac{1}{K} B_{\alpha;(\omega_2)}^2 \tag{9}$$

$$\delta M_{0\alpha} - \frac{\alpha}{\beta} \delta M_{0\beta} = \alpha \, \Delta\omega K \left( B_{\beta;(K\omega_2)}^2 - B_{\beta;\left(\frac{2\pi}{\tau} - K\omega_1\right)}^2 \right) \tag{10}$$
$$= \Delta\omega \, K\alpha \, \Delta B_\beta^2$$
$$= M_{ob2} - M_{ob1}$$

4

oder

$$\delta M_{0\alpha} - \frac{\alpha}{\beta}\, \delta M_{0\beta} = \alpha\, \Delta\omega \left( B^2_{\alpha;(\omega_2)} - B^2_{\alpha;\left(\frac{2\pi}{\tau} - \omega_1\right)} \right)$$

$$= \alpha\, \Delta\omega\, \Delta B^2_\alpha \tag{11}$$

$$= M_{ob2} - M_{ob1}\, .$$

Diese Gleichungen (10) und (11) sagen aus, daß trotz Überlappung mit $|F_{a\alpha}|^2$ in der Frequenzlage $\alpha$ und mit $|F_{a\beta}|^2$ in der Frequenzlage $\beta$ die Differenz der Leistungen gemessen werden kann, welche in den Einzelspektren $F_{b\alpha}$ und $F_{b\beta}$ an den Stellen $\omega_2$ (oder $K\omega_2$) einerseits und $(2\pi/\tau - K\omega_1)$ (oder $(2\pi/K\tau - \omega_1)$) andererseits mit der Bandbreite $\Delta\omega$ (bzw. $K \cdot \Delta\omega$) ausgefiltert werden.

Die Differenz der Filtermittenfrequenzen ist in der Frequenzlage $\beta$ :

$$\Delta\omega_{K\beta} = K\omega_2 - \frac{2\pi}{\tau} - K\omega_1$$

$$= K\left( \frac{2\pi}{\tau} - \omega_1 - \frac{2\pi}{\tau} - K\omega_1 \right) \tag{12}$$

$$\Delta\omega_{K\beta} = \frac{2\pi}{\tau}(K - 1)\, . \tag{13}$$

Bei einer zentralen Sendefrequenz von 3,7 MHz, einer Pulswiederholfrequenz von $1/\tau = 15$ kHz und einem Abstand zwischen den Frequenzlagen $\alpha$ und $\beta$ von 660 kHz ergibt sich dann z. B.

$$\Delta f_{K\beta} = 2{,}97\ \text{kHz} \approx 3\ \text{kHz}\, . \tag{14}$$

Bezogen auf das Frequenzband $\alpha$ gilt

$$\Delta f_{K\alpha} = \frac{\Delta f_{K\beta}}{K} = 2{,}479\ \text{kHz} \approx 2{,}5\ \text{kHz}\, . \tag{15}$$

Man kann dies als eine Frequenzanalyse von $F_{b\alpha}$ mit der Bandbreite $\Delta\omega$ auffassen, bei der die Amplituden des Leistungsspektrums an zwei Stellen herausgegriffen und die Differenz gebildet wurde.

Die Filtermittenfrequenzen beider Stellen haben konstanten Abstand, der von den Systemparametern $\tau$ und $K$ abhängt (Gleichungen 12 und 13). Die Filtermittenfrequenzen sind :

für $F_{b\beta}$ :     oben :     $K\omega_2 = K\left( \dfrac{2\pi}{\tau} - \omega_1 \right)$         (16)

          unten :     $\dfrac{2\pi}{\tau} - K\omega_1 = -\dfrac{2\pi}{\tau}(K - 1) + K\omega_2 = K\omega_2 - \Delta\omega_{K\beta}$     (17)

für $F_{b\alpha}$ :     oben :     $\omega_2 = \dfrac{2\pi}{\tau} - \omega_1$         (18)

          unten :     $\dfrac{2\pi}{K\tau} - \omega_1 = -\dfrac{2\pi}{\tau}\dfrac{K - 1}{K} + \omega_2 = \omega_2 - \Delta\omega_{K\alpha}\, .$     (19)

Die Differenzfrequenz $\Delta f_{K\alpha}$ ist genau so groß wie die Frequenzlücke zwischen der maximalen Frequenz von $F_{b\alpha}$ und $1/\tau$, die bestehen bleiben muß, damit $F_{b\beta}$ nicht über die Bandbreite $1/\tau$ wächst (siehe Figuren 2 und 3) :

Wenn in der Frequenzlage $\beta$ gilt :

$$K\omega_2 = \frac{2\pi}{\tau} \tag{20}$$

dann ist die Frequenzlücke in der Lage $\alpha$

$$\Delta f_{K\alpha} = \frac{2\pi}{\tau} - \omega_2 = \frac{2\pi}{\tau} - \frac{1}{K} \cdot \frac{2\pi}{\tau} = \frac{2\pi}{\tau}\frac{K - 1}{K} = \frac{\Delta f_{K\beta}}{K}\, . \tag{21}$$

Diese Tatsache kann man nutzen, um aus den Differenzwerten der Spektralanalyse auf das Spektrum selbst zu schließen :

Legt man die obere Filterstelle, bezogen auf $F_{b\alpha}$, in den Bereich $\omega_1 = 0$ bis $\Delta f_{K\alpha}$ bzw.

$$\omega_2 = \frac{2\,\pi}{\tau_2} - \Delta f_{K\alpha} \text{ bis } 2\,\pi/\tau,$$

dann wird $|F_{b\alpha} \cdot G_\alpha|^2 = 0$ bzw. $B_\alpha$ ; $(\omega_2) = 0$,
wenn keine Bereichsüberschreitung vorliegt (s. Figur 3). In diesem Bereich kann also $B^2$

$$\alpha_j \left( \frac{2\,\pi}{K\,\tau} - \omega_1 \right)$$

direkt gemessen werden, und zwar an einer frei wählbaren Stelle mit einstellbarer Bandbreite je nach Filterwahl. Im Beispiel bedeutet das, bezogen auf $F_{b\alpha}$, daß der 2,5 kHz breite (höchstzulässige) Bereich von 10 kHz bis 12,5 kHz bzw. bezogen auf $F_{b\beta}$ der 3 kHz breite Bereich von 12 bis 15 kHz direkt ausgemessen werden kann. Die darunterliegenden Bereiche findet man durch Aufaddition der Differenzwerte (s. Figur 4). Im Beispielfall mit $\Delta f_{K\alpha} = 2,5$ kHz sind es vier Aufadditionen für das gesamte Spektrum.

Das Spektrum der Gegenströmung findet man nach Gleichung (5) durch eine dritte Spektralanalyse z. B. von $M_{0\alpha}$, wobei für gleichartig liegende Filter $G_\alpha$ gilt

$$\alpha A_\alpha \; ; \; (_{\omega 1})\Delta\omega = \delta M_{0\alpha} \; ; \; (_{\omega 1}) - \alpha B^2(_{\omega 1})\Delta\omega \qquad (22)$$

Die Analysebreite $\Delta\omega$ ist als frequenzunabhängig konstant angenommen.

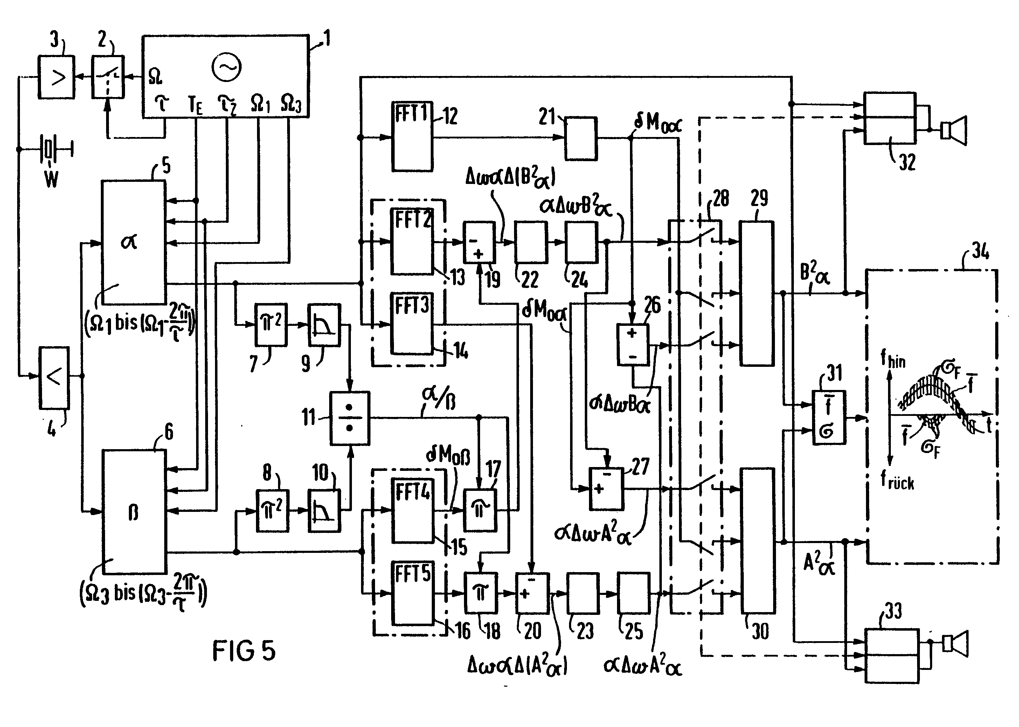

Das Prinzipschaltbild zur Durchführung der kompensatorischen Mehrbereichs-Frequenzanalyse ist in der Figur 5 dargestellt. In diesem Prinzipschaltbild erzeugt ein Oszillator 1 die zentrale Sendefrequenz $\Omega/2\pi$ (z. B. 3,7 MHz) und Hilfsfrequenzen, wie die Pulswiederholfrequenz $1/\tau$ (z. B. 15 kHz) und Empfangs-Oszillatorfrequenzen $\Omega_1/2\pi$ ; $\Omega_3/2\pi$, sowie die Empfangstorzeit $T_E$ (z. B. 2,7 us) und Zeitverzögerung $\tau_Z$ für die Tiefenlage des Signaleinzugsbereichs. In einem Sendetor 2 wird eine Zahl von Perioden der Sendefrequenz (z. B. 1 Periode) im Rhythmus $1/\tau$ ausgeblendet und über den Sendeverstärker 3 zum elektroakustischen Wandler W geschickt.

Das Empfangssignal gelangt über einem Empfangsverstärker 4 zu zwei Einseitenbandempfängern 5 und 6. Diese empfangen ein Frequenzband der Breite $1/\tau$ in einer tiefen Frequenzlage $\alpha$ (z. B. unterhalb $\Omega_1$) und einer hohen Frequenzlage $\beta$ (unterhalb $\Omega_3$). Die Einseitenbandempfänger 5, 6 können z. B. nach der Quadraturmethode arbeiten. Die Ausgangssignale der Empfänger sind die demodulierten Dopplersignale, welche von Vor- und Rückfluß herrührende überlagerte Spektren beinhalten können.

Von beiden Ausgangssignalen wird in den Integratoren 7, 8, 9, 10 (Serienschaltung aus Quadriergliedern 7, 8 und Tiefpässen 9, 10) die jeweilige Gesamtleistung (Zeitkonstante z. B. 1/5 Hz = 0,2 s) und im Quotientenbildner 11 der Quotient $\alpha/\beta$ beider Werte gebildet.

Beide Ausgangssignale werden außerden fünf FFT-Spektralanalysatoren FFT1 bis FFT5 (Blöcke 12 bis 16) angeboten. Die Analysebandbreite für das Signal der Frequenzlage $\alpha$ ist z. B. $\Delta f = 125$ Hz. Für die Frequenzlage $\beta$ beträgt sie $K\Delta f = 150$ Hz, wobei $K = \Omega_3/\Omega_1 = 1,2$.

Zuerst soll das Zusammenwirken von FFT2 und FFT4 beschrieben werden: Während FFT2 die spektrale Leistung bei der Kreisfrequenz $\omega_1$ bildet, bildet FFT4 diejenige bei $K\omega_1$. Das Ergebnis von FFT2 wird in einem Subtrahierglied 19 von dem im Multiplizierglied 17 mit $\alpha/\beta$ multiplizierten Ergebnis von FFT4 abgezogen. Auf diese Weise verschwindet der von $|F_a|^2$ herrührende Teil des Spektrums und es bleibt die Differenz zweier Spektralteile von $|F_b|^2$, die im Abstand $\Delta f_K$ liegen. Solange $0 < \omega_1 < \Delta\omega_{K\alpha}$, wird das Leistungsspektrum von $F_b$ unmittelbar im Bereich I (s. Figur 4) gebildet, wenn keine unzulässigen Bereichsüberschreitungen der Bandbreiten bzw. Geschwindigkeiten vorliegen. Wenn $\Delta\omega_{K\alpha} < \omega_1 < 2\Delta\omega_{K\alpha}$, wird der Bereich II von $F_b$ erfaßt und man kommt zum Analyseergebnis durch Aufaddition (Addierglied 24 mit vorgeschaltetem Speicher 22) der Werte mit dem vorher für Bereich I erhaltenen Wert. Gäbe es keine (meßzeitbedingten) Meßfehler, könnte in dieser Weise fortgefahren werden, bis das ganze Spektrum von $F_{b\alpha}$ analysiert ist. Kleinere (noch tolerable) Fehler erhält man, wenn die (noch fehlenden) Bereiche III, IV, V von $F_b$ auf andere Weise berechnet werden. Die Analysatoren FFT2 und FFT4 werden also nur über die Bandbreiten $2\Delta f_{K\alpha}$ (2 · 2,5 kHz) bzw. $2\Delta f_{K\beta}$ (2 · 3 kHz) benötigt.

Entsprechend arbeiten die Analysatoren FFT3 und FFT5 zusammen. Sie arbeiten bei den Kreisfrequenzen $\omega_2$ bzw. $k\omega_2$ auch nur über die Bandbreiten $2\Delta f_{K\alpha}$ bzw. $2\Delta f_{K\beta}$ (von $2\pi/\tau - 2\Delta f_{K\alpha}$ ᵦ bis $2\pi/\tau$ und bilden nach Multiplikation im Multiplizierglied 18 und Subtraktion im Subtrahierglied 20 sowie Aufaddition der Differenzwerte im Addierglied 25 das Spektrum von $F_{a\alpha}$ in den Bereichen IV, V. Das Spektrum von $F_{b\alpha}$ in diesen Bereichen IV, V findet man durch Differenzbildung im Differenzbildner 26 mit dem Analyseergebnis von FFT1 (Kreisfrequenz $\omega_1$, Bandbreite 0 bis $2\pi/\tau$), welches die überlagerten Signale betrifft. Der unterste Bereich V von $F_{b\alpha}$ ist gleich dem Ergebnis von FFT1, weil $F_{a\alpha}$ nicht in diesen Bereich vordringt, wenn keine unzulässige Bereichsüberschreitung vorliegt. Dasselbe passiert im Differenzbildner 27, um die noch fehlenden Bereiche von $F_{a\alpha}$ zu finden. Vom Aufwand her entsprechen FFT4 und FFT5 zusammengenommen einem Analysator der Art von FFT1. Die Ergebnisse von FFT2 und FFT3 können auch direkt von FFT1 erhalten werden. Somit sind also vom Gesamtaufwand her gesehen zwei FFT-Analysatoren nach Art des FFT1 hardwaremäßig notwendig. Die Aufteilung auf fünf FFT-Prozessoren mit dem Gesamtaufwand von eigentlich nur zwei FFT-Prozessoren wurde aus Gründen der besseren Übersichtlichkeit gewählt. Auch die Blöcke 7, 8, 9, 10 müssen nicht hardwaremäßig vorhanden sein ; sie können durch Summenbildung der Analyseergebnisse beider Spektrographen ersetzt werden.

Im Block 28 wird ein Näherungswert für die Integralfunktionen

$$J_{b\alpha} = \int_{\omega_2}^{(\frac{2\pi}{\tau} - \Delta\omega_{K_a})} |F_{b\alpha}|^2 d\omega_2 = \int_{\Delta\omega_{K_a}}^{\omega_1} |F_{b\alpha}|^2 d\omega_1 \qquad (23)$$

$$J_{a\alpha} = \int_{\Delta\omega_{K_a}}^{\omega_2} |F_{a\alpha}|^2 d\omega_2 = \int_{\omega_1}^{(\frac{2\pi}{\tau} - \Delta\omega_{K_a})} |F_{a\alpha}|^2 d\omega_1 \qquad (24)$$

durch Bildung der Summen der Analyseergebnisse gebildet und anhand der Funktionen entschieden, ob spektrale Überlappung bezüglich der Frequenzlage $\alpha$ vorliegt. Wenn dies nicht der Fall ist, wird das Analyseergebnis von FFT1 direkt verwendet, um die geringstmöglichen Fehler zu erhalten.

Anhand des Endwertes der Integrale ($\omega_1 = \omega_2 = 2\pi/\tau$) kann auch entschieden werden, ob ein Spektrum gegenüber den anderen so schwach ist, daß mit unzulässig großen Fehlern gerechnet werden muß. Man könnte dies im Anzeigegerät 34 anzeigen, indem z. B. die eingeblendete Kurve $\bar{f}$ bei zu schwachen weggelassen wird.

In Mittelwertbildnern 29, 30 werden mehrere benachbarte Analysewerte im Sinne einer Mittelung zusammengefaßt, um zu weniger stark streuenden Werten zu kommen. Die Zahl der zu mittelnden Werte richtet sich nach der Frequenzauflösung, die z. B. 10 % der Frequenz beträgt.

Damit stehen die Einzelspektren trotz gegenseitiger Überlagerung getrennt zur Weiterverarbeitung zur Verfügung. Es bietet sich eine optische und akustische Anzeige an.

Die akustische Anzeige ist klein Problem, wenn im Block 28 festgestellt wurde, daß keine Überlappung der Spektren vorliegt. Dann wird in den oberen Teilen der Blöcke 32, 33 eine Trennung der Signale über (variable) Filter vorgenommen und das Band $|F_{b\alpha}|$ durch Demodulation mit der Oszillatorfrequenz $1/\tau$ invertiert ; anschließend werden beide Richtungssignale getrennt wiedergegeben.

Im Falle überlagerter Spektren sind die Zeitfunktionen zu den Einzelspektren $F_{a\alpha}$ und $F_{b\beta}$ aus $|F_{a\alpha}|^2$ bzw. $|F_{b\alpha}|^2$ nicht rekonstruierbar. Bekanntermaßen repräsentieren aber nur « grobe Ausschnitte » des Dopplerspektrums gemäß der Frequenzauflösung des Puls-Doppler-Systems eine Aussage über die Strömung. Die Doppler-Zeitfunktionenein und desselben Strömungsfadens, aus verschiedenen Frequenzlagen gewonnen, unterscheiden sich stark.

Es müßte also erlaubt sein, ein Rauschspektrum gemäß $|F_{a\alpha}|^2$ bzw. $|F_{b\alpha}|^2$ neu zu generieren und akustisch als Ersatzfunktion wiederzugeben, ohne dadurch einen wesentlichen Informationsverlust bezüglich der Strömungsaussage hinnehmen zu müssen. Die Zeitfunktion hat dann mit dem ursprünglichen Dopplersignal nur noch ihre « spektrale Eigenschaft » gemeinsam.

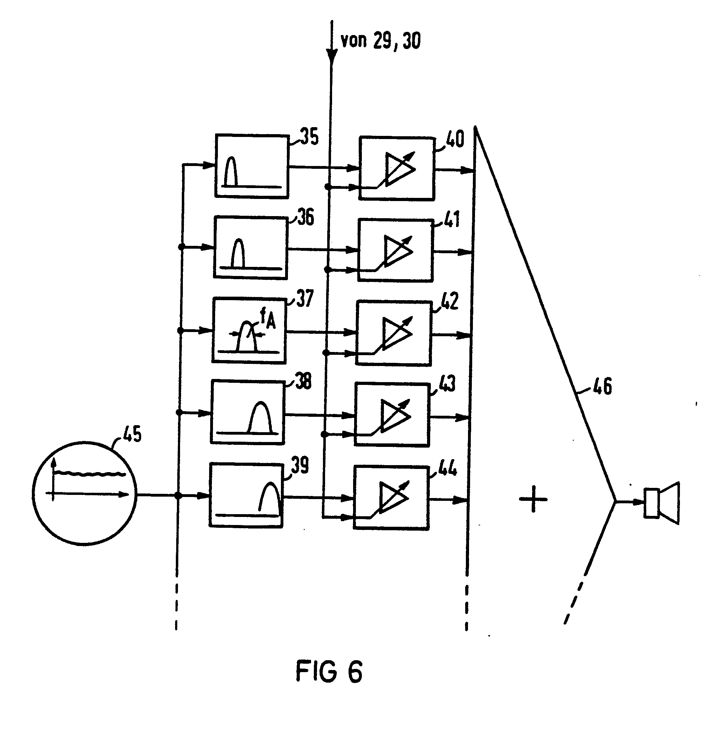

Daher symbolisieren die unteren Teile der Blöcke 32, 33 Signal-Synthetisierer, z. B. gemäß Figur 6, die umgekehrt wie ein Analysator arbeiten. Im vorstellungsmäßig einfachsten Fall besteht er aus einer Filterbank mit Filterzweigen 35 bis 39 etc. (entsprechend den Analysebereichen) mit Stellgliedern 40 bis 44 etc. für die Verstärkung jedes Filterzweiges. An allen Eingängen liegt ein breitbandiges weißes Rauschen eines Rauschgenerators 45. Die Ausgänge werden alle mittels Summierschaltung 46 aufsummiert. Die Stellglieder werden gemäß dem Analyseergebnis eingestellt. Technisch elegantere (digitale) Aufführungsformen sind denkbar.

Die optische Anzeige der Spektren kann in bekannter Weise erfolgen (mittels Anzeigegerät 34), wie insbesondere Kathodenstrahlröhre. Die Analysefrequenzen werden über der Zeitachse dargestellt, wobei die spektrale Leistungsdichte bei jeder Frequenz in Helligkeitsmodulation gebracht wird. Zusätzlich kann eine Schätzfunktion für die mittlere Frequenz $\bar{f}$ und die Bandbreite $\sigma_F$ eingeblendet werden. Die mittlere Frequenz erhält man aus dem Einzelspektrum nach der folgenden Formel, indem man die Integrale durch endliche Summen ersetzt.

$$\bar{\omega} = 2\pi\bar{f} = \frac{\lim\limits_{\tau_M \to \infty} \frac{1}{\tau_M} \int_0^{\infty} |F(\omega)|^2 \omega \, d\omega}{\lim\limits_{\tau_M \to \infty} \frac{1}{\tau_M} \int_0^{\infty} |F(\omega)|^2 \, d\omega} . \qquad (25)$$

Die Bandbreite $\sigma_F$ berechnet man ebenfalls aus dem Spektrum nach der Formel :

$$\sigma_F = \sqrt{\frac{M_2}{M_0} - \bar{f}^2} \qquad (26)$$

7

wobei $M_0$ das 0. Moment des Dopplerspektrums und $M_2$ das 2. Moment des Dopplerspektrums sind.

Eine Rechenschaltung 31 ist zur Bildung der mittleren Frequenz $\bar{f}$ und der Bandbreite $\sigma_F$ vorgesehen. Die am Anzeigegerät 34 angedeuteten Kurven stellen $\bar{f} \pm \sigma_F$ dar.

**Patentansprüche**

1. Verfahren zur Messung einer Strömung, in der Teilchen enthalten sind, insbesondere zur Blutströmungsmessung, nach der Ultraschall-Puls-Doppler-Methode, bei dem Ultraschall-Sendeimpulse in ein Signaleinzugsgebiet eines Untersuchungsobjekts in Richtung auf die Teilchen des strömenden Mediums abgestrahlt und aus den Teilchen des strömenden Mediums abgestrahlt und aus den Teilchen reflektierte Echoimpulse empfangen werden, bei dem die empfangenen Echoimpulse in elektrische Dopplersignale umgewandelt werden, bei dem aus dem Frequenzunterschied zwischen ausgesendeten und empfangenen Ultraschallimpulsen nach Spektralanalyse ein Meß-Signal für die Strömung des strömenden Mediums ermittelt wird, und bei dem das Meßsignal optisch und/oder akustisch angezeigt wird, dadurch gekennzeichnet, daß es die folgenden Verfahrensschritte aufweist:

a) es wird eine gleichzeitige Spektralanalyse der Dopplersignale in wenigstens zwei unterschiedlichen Frequenzlagen ($\alpha$, $\beta$) vorgenommen, wobei die in diesen Frequenzlagen ($\alpha$, $\beta$) befindlichen Dopplerspektren Ähnlichkeitsgesetzen unterworfen sind und wobei die von denjenigen Teilchen des Signaleinzugsgebiets, die sich mit bestimmter Geschwindigkeitskomponente in Schallrichtung bewegen, herrührenden spektralen Ausschnittsleistungen ($M_{0\alpha}$, $M_{0\beta}$ bzw. $M_{0b1}$, $M_{0b2}$, $M_{0a}$) als gleich vorausgesetzt sind,

b) durch kompensatorische Überlagerung werden solche überlagerten Anteile der Dopplerspektren ($M_{0a}$), die nicht angezeigt werden sollen, aus der Messung eliminiert, und

c) das nach der kompensatorischen Überlagerung erhaltene Meßsignal wird optisch und/oder akustisch angezeigt oder aufgezeichnet.

2. Verfahren nach Anspruch 1, dadurch gekennzeichnet, daß die Spektralanalysen in den unterschiedlichen Frequenzlagen ($\alpha$, $\beta$) an zwei Stellen vorgenommen werden, an denen sich Ausschnittsleistungen ergeben, die in den Mittenfrequenzen ($\omega_1$ bzw. $K \cdot \omega_1$) und in den Bandbreiten ($\Delta\omega$ bzw. $K\Delta\omega$) um einen Dehnungsfaktor K gegeneinander vergrößert sind und die in den Leistungsdichten ($A^2$ bzw. $A^2/K$) gegeneinander um diesen Faktor K verkleinert sind, mit $K = \Omega_3/\Omega_1$, wobei $\Omega_1$ und $\Omega_3$ verschiedene Sendekreisfrequenzen in den unterschiedlichen Frequenzlagen ($\alpha$ und $\beta$) darstellen.

3. Verfahren nach Anspruch 1 und 2, dadurch gekennzeichnet, daß bei gleichzeitig erfaßtem Hin- und Rückfluß des strömenden Mediums das eine Spektrum ($|F_b|^2$) der überlagerten Spektren, resultierend aus der einen Flußrichtung, isoliert wird dadurch, daß beginnend von einem Randwert (Figur 3), bei dem wenigstens der Leistungsanteil des zu isolierenden Spektrums in der einen Frequenzlage ($\alpha$) Null ist, nach der kompensatorischen Methode zuerst der Randwert ($M_{0b}$)$_1$ des zu isolierenden Spektrums aus der zweiten Frequenzlage ($\beta$) gemessen wird und anschließend durch schrittweise Weiterführung der Analyse (Figur 2) mit sich ändernder Doppler-Frequenz weitere Differenzwerte des isolierten Spektrums an zwei unterschiedlichen Frequenzstellen ermittelt und zukzessive zu vorher ermittelten Werten aufaddiert werden (Figur 4).

4. Verfahren nach Anspruch 3, dadurch gekennzeichnet, daß eine Spektralanalyse, beginnend von einem Randwert und eine vorgebbare Zahl von Schritten in der einen Richtung fortschreitend, von einer gegenläufigen Spektralanalyse, beginnend vom anderen Randwert und in der Gegenrichtung eine entsprechend vorgebbare Zahl von Schritten fortschreitend, begleitet wird.

5. Verfahren nach Anspruch 3 oder 4, dadurch gekennzeichnet, daß das Spektrum ($|F_a|^2$) für die Gegenflußrichtung isoliert wird dadurch, daß die Differenz zwischen dem überlagerten Spektrum (Ausgangssignal von FFT1 in Figur 5) und dem zuerst isolierten Spektrum ($|F_b|^2$) gemessen wird.

6. Verfahren nach Anspruch 3 oder 4, dadurch gekennzeichnet, daß das Spektrum ($|F_a|^2$) für die Gegenflußrichtung isoliert wird dadurch, daß anstelle der zuvor ausgemessenen Seitenbänder die jeweils anderen Seitenbänder in beiden Frequenzlagen ausgewertet werden.

7. Verfahren nach einem der Ansprüche 3 bis 6, dadurch gekennzeichnet, daß vor Durchführung einer Analyse von den beiden überlagerten Spektren aus Hin- und Rückfluß in den beiden unterschiedlichen Frequenzlagen ($\alpha$, $\beta$) die Gesamtleistung der überlagerten Spektren gebildet wird, und daß die Information über die Gesamtleistungen dazu verwendet wird, die Pegel der Dopplersignale, die den beiden Frequenzlagen entstammen, einander anzugleichen.

8. Verfahren nach Anspruch 7, dadurch gekennzeichnet, daß der Pegelangleich in der Weise geschieht, daß die ermittelten Leistungen der überlagerten Gesamtspektren durcheinander dividiert werden und anschließend das Doppler-Signal eines Kanales mit dem gebildeten Quotientensignal multipliziert wird.

9. Verfahren nach einem der Ansprüche 1 bis 8, dadurch gekennzeichnet, daß die Analyse mit einer absoluten Bandbreite ($\Delta\omega$, $K \cdot \Delta\omega$) vorgenommen wird, die der Bandbreite entspricht, welche bei der niedrigsten interessierenden Doppler-Frequenz gemäß der Unschärferelation des Doppler-Systems Information über die entsprechend interessierende niedrigste Strömungsgeschwindigkeit trägt (entsprechend der Meßgenauigkeit für die Geschwindigkeit).

10. Verfahren nach Anspruch 9, dadurch gekennzeichnet, daß dür höhere interessierende Doppler-Frequenzen solch eine Anzahl von aus entsprechenden Doppler-Frequenzbereichen stammenden Analysewerten der absoluten Bandbreite ($\Delta\omega$, $K \cdot \Delta\omega$) aufaddiert werden, die in der Summe die Banbreite ergeben, welche bei der höheren interessierenden Doppler-Frequenz gemäß der Unschärferelation des Doppler-Systems Information über die entsprechend höhere Strömung trägt.

11. Verfahren nach einem der Ansprüche 1 bis 10, dadurch gekennzeichnet, daß aus dem Analyseergebnis rückwirkend ein Doppler-Signal synthetisiert wird, dessen Zeitfunktion zwar nicht derjenigen entspricht, die im überlagerten Spektrum enthalten ist, die aber die gleichen spektralen Eigenschaften (Leistungsspektrum) wie diese Zeitfunktion hat.

12. Verfahren nach einem der Ansprüche 1 bis 11, dadurch gekennzeichnet, daß in eine helligkeitsmodulierte Spektraldarstellung des Spektrums (Frequenz über der Zeit) als Kurvenzug eine mittlere Frequenz ($\bar{f}$) des Analyseergebnisses gegebenenfalls zusammen mit Streuwerten einblendbar ist.

13. Ultraschall-Puls-Doppler-Gerät zur Messung und Anzeige einer Strömung zur Durchführung des Verfahrens nach Anspruch 1, mit einem elektroakustischen Wandler (W) einem Frequenzanalysator (FFT1, FFT2 ; FFT1 bis FFT5) und einer Anzeigeeinrichtung (32, 33 ; 34) zur optischen und/oder akustischen Anzeige oder Aufzeichnung, dadurch gekennzeichnet, daß zur Spektralanalyse der anfallenden Doppler-Signale vor oder nach deren Demodulation in wenigtens zwei unterschiedlichen und nach Ähnlichkeitsgesetzen ähnlichen Frequenzlagen ($\alpha$, $\beta$) wenigstens zwei Spektralanalysatoren (FFT1, FFT2 bzw. FFT1 bis FFT5) vorhanden sind, die Filter funktionen ($G_\alpha$, $G_\beta$) mit variablen Mittenfrequenzen ($\omega_1$, $K \cdot \omega_1$) und vorgegebenen Durchlaßbandbreiten ($\Delta\omega$, $K\Delta\omega$) derart aufweisen, daß bei den beiden Frequenzlagen ($\alpha$, $\beta$) jeweils bei veränderten Mittenfrequenzen ($\omega_1$, $K \cdot \omega_1$) schrittweise gleichartige Ausschnittsleistungen (($M_{0b2} + M_{0a}$) und ($M_{0b1} + M_{0a}$)) herausgefiltert werden daß diese Ausschnittsleistungen, vorzugsweise nach vorhergehendem Pegelausgleich, einem Subtrahierglied (D) zur Bildung der Differenz ($M_{0b1} - M_{0b2}$) zugeleitet werden, und daß eine Aufaddierschaltung (24, 25) vorhanden ist, die die Differenzwerte der Ausschnittsleistungen sukzessive zu zuvor ermittelten Werten aufaddiert, wodurch das Leistungsspektrum ($|F_{b\alpha}|^2$) einer Flußrichtung des strömenden Mediums erhalten wird.

14. Gerät nach Anspruch 13, dadurch gekennzeichnet, daß die Spektralanalysatoren in der Weise ausgebildet sind, daß eine schrittweise Analyse, beginnend von einem Randwert, ermöglicht ist.

15. Gerät nach Anspruch 14, dadurch gekennzeichnet, daß die Spektralanalysatoren auch in der Weise ausgebildet sind, daß eine schrittweise Analyse gleichzeitig aus zwei entgegengesetzten Frequenzrichtungen, beginnend von jeweils gegenüberliegenden Randwerten der Spektren, möglich ist.

16. Gerät nach einem der Ansprüche 13 bis 15, dadurch gekennzeichnet, daß je einem Einseitenbandempfänger (5, 6) für zwei Frequenzlagen ($\alpha$, $\beta$) wenigstens je ein Spektralanalysator (FFT2, FFT3 bzw. FFT4, FFT5) nachgeschaltet ist, denen Ausgleichsglieder (7, 9 ; 8, 10 ; 11 ; 17, 18) für den Pegelausgleich zugeordnet sind.

17. Gerät nach einem der Ansprüche 13 bis 16, dadurch gekennzeichnet, daß zur Ermittlung des Spektrums ($|F_a|^2$) für die Gegenflußrichtung ein Differenzbildner (26, 27) zur Bildung der Differenz zwischen dem Gesamtspektrum (von FFT1) und dem bereits isolierten Spektrum ($|F_b|^2$) vorhanden ist.

18. Gerät nach einem der Ansprüche 15 bis 17, dadurch gekennzeichnet, daß bei schrittweiser Analyse aus zwei entgegengesetzten Frequenzrichtungen wenigstens zwei Differenzbildner (26, 27) vorhanden sind.

19. Gerät nach einem der Ansprüche 13 bis 18, dadurch gekennzeichnet, daß zur Durchführung des Verfahrens nach den Ansprüchen 9 und 10 eine Addierschaltung (29, 30), vorzugsweise eine digitale Addierschaltung, vorhanden ist.

20. Gerät nach einem der Ansprüche 13 bis 19 zur Durchführung des Verfahrens nach Anspruch 11, dadurch gekennzeichnet, daß Rauschsynthetisierer (32, 33 ; 35-46) vorhanden sind.

21. Gerät nach einem der Ansprüche 13 bis 20 zur Durchführung des Verfahrens nach Anspruch 12, dadurch gekennzeichnet, daß eine Rechenschaltung (31) zur Bildung der mittleren Frequenz ($\bar{f}$) sowie gegebenenfalls der Strömung vorhanden ist.

**Claims**

1. A method of measuring a flow comprising particles, in particular for blood flow measurement, in accordance with the ultrasonic pulse Doppler method, wherein ultrasonic transmitting pulses are irradiated into a signal entry region of an object under examination in the direction of the particles of the flowing medium, and reflected echo signals received from the particles are converted into electrical Doppler signals, wherein a measuring signal for the flow of the flowing medium is determined from the frequency difference between the transmitted and received ultrasonic pulses after a spectral analysis, and wherein the measuring signal is displayed optically and/or acoustically, characterised in that it involves the following steps :

a) a simultaneous spectral analysis of the Doppler signals is carried out in at least two different frequency position ($\alpha$, $\beta$), where the Doppler spectra present in these frequency positions ($\alpha$, $\beta$) are subjected to laws of similarity, and where the spectral sector powers ($M_{0\alpha}$, $M_{0\beta}$ and $M_{0b1}$, $M_{0b2}$, $M_{0a}$) which emanate from the particles in the signal entry region, which move in the acoustic direction by means of a specific velocity component, are supposed to be identical,

9

b) superimposed components of the Doppler spectra ($M_{0a}$) which are not to be displayed are eliminated from the measurement by compensatory superimposition, and

c) the measuring signal obtained after the compensatory superimposition is optically and/or acoustically displayed or recorded.

2. A method as claimed in Claim 1, characterised in that the spectral analyses in the different frequency positions ($\alpha$, $\beta$) are carried out at two points, where sector powers occur which are mutually increased in the central frequencies ($\omega_1$ and $K \cdot \omega_1$) and in the band widths ($\Delta\omega$ and $K \cdot \Delta\omega$) by an expansion factor K, and which are mutually decreased by said factor K in the power densities ($A^2$ and $A^2/K$), where $K = \Omega_3/\Omega_1$ and $\Omega_1$ and $\Omega_3$ illustrate different transmitting circuit frequencies in the different frequency positions ($\alpha$ and $\beta$).

3. A method as claimed in Claims 1 and 2, characterised in that when the outgoing and incoming flow of the flowing medium is simultaneously measured, the one spectrum ($|F_b|^2$) of the superimposed spectra, resulting from the one flow direction, is isolated in that commencing from a boundary value (Figure 3) where at least the power component of the spectrum to be isolated is zero in the one frequency position ($\alpha$), in accordance with the compensatory method the boundary value ($M_{0b1}$)$_i$ of the spectrum to be isolated from the second frequency position ($\beta$) is firstly measured and by a gradual continuation of the analysis (Figure 2), with changing Doppler frequency further difference values of the isolated spectrum are subsequently determined at two different frequency locations and successively added to previously determined values (Figure 4).

4. A method as claimed in Claim 3, characterised in that a spectral analysis commencing from a boundary value and advancing a predetermined number of steps in the one direction is accompanied by an oppositely directed spectral analysis commencing from the other boundary value and progressing a correspondingly predetermined number of steps in the opposite direction.

5. A method as claimed in Claim 3 or 4, characterised in that the spectrum ($|F_a|^2$) for the counter-flow direction is isolated in that the difference between the superimposed spectrum (output signal of FFT1 in figure 5) and the first isolated spectrum ($|F_b|^2$) is measured.

6. A method as claimed in Claim 3 or 4, characterised in that the spectrum ($|F_a|^2$) for the counter-flow direction is isolated in that in place of the first measured side bands the respective other side bands are analysed in both frequency positions.

7. A method as claimed in one of Claims 3 to 6, characterised in that prior to the performance of an analysis of the two superimposed spectra the total power of the superimposed spectra is formed from the outgoing and incoming flow in the two different frequency position ($\alpha$, $\beta$), and that the information about the total powers is used to adapt the levels of the Doppler signals emanating from the two frequency positions to one another.

8. A method as claimed in Claim 7, characterised in that the level adaptation is effected in such a manner that the determined powers of the superimposed total spectra are divided by one another and the Doppler signal of a channel is subsequently multiplied by the formed quotient signal.

9. A method as claimed in one of Claims 1 to 8, characterised in that the analysis is effected by means of an absolute bandwidth ($\Delta\omega$, $K \cdot \Delta\omega$) which corresponds to the bandwidth which, in the case of the lowest Doppler frequency of interest in accordance with the diffusion relation of the Doppler system carries information about the corresponding lowest velocity of flow which is of interest (in accordance with the accuracy of measurement for the velocity).

10. A method as claimed in Claim 9, characterised in that for higher Doppler frequencies of interest, a number of analysis values of the absolute bandwidth ($\Delta\omega$, $K \cdot \Delta\omega$), which emanate from corresponding Koppler frequency regions, are added, to give as a total result over the bandwidth which in the case of the higher Doppler frequency of interest in accordance with the diffusion relation of the Doppler system carries information about the corresponding higher flow.

11. A method as claimed in one of Claims 1 to 10, characterised in that from the analysis result a Doppler signal is retrospectively synthetized, whose time function does not correspond to that included in the superimposed spectrum, but which has the same spectral characteristics (power spectrum) as said time function.

12. A method as claimed in one of Claims 1 to 11, characterised in that an average frequency (F) of the analysis result, possibly together with deviation values, can be gated into a brightness-modulated spectral illustration of the spectrum (frequency over the time) as a drawn curve.

13. An ultrasonic pulse Doppler device for measuring and displaying a flow for implementing the method as claimed in Claim 1, comprising an electro-acoustic transducer (W), a frequency analyser (FFT1, FFT2 ; FFT1 to FFT5) and a display device (32, 33 ; 34) for the optical and/or acoustic display or recording, characterised in that for the spectral analysis of the occurring Doppler signals before or after the demodulation thereof, in at least two different frequency positions ($\alpha$, $\beta$) which are similar in accordance with laws of similarity, there are arranged at least two spectral analysers (FFT1, FFT2 and FFT1 to FFT5) which possess filter functions ($G_\alpha$, $G_\beta$) with variable centre frequencies ($\omega_1$, $K \cdot \omega_1$) and predetermined widths of bandpass ($\Delta\omega$, $K\Delta\omega$) in such a manner that in the two frequency positions ($\alpha$, $\beta$) with varied centre frequencies ($\omega_1$, $K \cdot \omega_1$) similar sector powers (($M_{0b2} + M_{0a}$) and ($M_{0b1} + M_{0a}$)) are gradually filtered out, that the sector powers, preferably after a preceding level equalization, are supplied to a subtracting element (D) for forming the difference ($M_{0b1} - M_{0b2}$), and that there is arranged an adding-up circuit (24, 25) which successively adds the difference values of the sector powers to previously determined values, whereby the power spectrum ($|F_{b\alpha}|^2$) of a direction of flow of the flowing medium is obtained.

14. Apparatus as claimed in Claim 13, characterised in that the spectral analysers are constructed to be such that a step-wise analysis is rendered possible, commencing from a boundary value.

15. Apparatus as claimed in Claim 14, characterised in that the spectral analysers are also constructed to be such that a step-wise analysis is simultaneously possible from two opposite frequency directions, commencing from respectively opposite boundary values.

16. Apparatus as claimed in one of Claims 13 to 15, characterised in that a single-side band receiver (5, 6) for two frequency positions ($\alpha$, $\beta$) is respectively followed by at least one spectral analyser (FFT2, FFT3 and FFT4, FFT5), to which are assigned equalizing elements (7, 9 ; 8, 10 ; 11 ; 17, 18) for level equalization.

17. Apparatus as claimed in one of the Claims 13 to 16, characterised in that in order to determine the spectrum ($|F_a|^2$) for the counter-flow direction there is arranged a difference former (26, 27) for forming the difference between the total spectrum (of FFT1) and the already isolated spectrum ($|F_b|^2$).

18. Apparatus as claimed in one of Claims 15 to 17, characterised in that in the case of a step-wise analysis from two opposite frequency directions at least two difference formers (26, 27) are provided.

19. Apparatus as claimed in one of Claims 13 to 18, characterised in that in order to implement the method as claimed in Claims 9 and 10, an adding circuit (29, 30) is provided, preferably a digital adding circuit.

20. Apparatus as claimed in one of Claims 13 to 19 in order to implement the method as claimed in Claim 11, characterised in that noise synthesisers (32, 33 ; 35 to 46) are provided.

21. Apparatus as claimed in one of Claims 13 to 20 in order to implement the methode as claimed in Claim 12, characterised in that a computation circuit (31) for forming the mean frequency ($\bar{f}$) and, as the case may be, the flow is provided.

**Revendications**

1. Procédé pour mesurer un écoulement, qui contient des particules, notamment pour la mesure du courant sanguin, selon le procédé Doppler à impulsions ultrasoniques, selon lequel on envoie des impulsions d'émission ultrasoniques dans une zone d'introduction de signaux d'un sujet à examiner, en direction des particules du fluide en écoulement et on reçoit des impulsions d'écho réfléchies en provenance des particules, on convertit les impulsions d'écho reçues en signaux Doppler électriques, on détermine un signal de mesure pour l'écoulement du fluide en écoulement, conformément à l'analyse spectrale, à partir de la différence des fréquences entre les impulsions ultrasoniques émises et les impulsions ultrasoniques reçues et le signal de mesure est reproduit sous forme optique et/ou acoustique, caractérisé par le fait qu'il comprend les phases opératoires suivantes :

a) on réalise une analyse spectrale simultanée des signaux Doppler dans au moins deux plages différentes de fréquences ($\alpha$, $\beta$), auquel cas les spectres Doppler situés dans ces plages de fréquences ($\alpha$, $\beta$) sont soumis à des lois de similitude et les puissances partielles spectrales ($M_{0\alpha}$, $M_{0\beta}$, ou $M_{0b1}$, $M_{0b2}$, $M_{0a}$), qui sont fournies par les particules de la zone d'introduction de signaux, qui se déplacent avec une composante déterminée de vitesse suivant la direction du son, sont supposées égales,

b) au moyen d'une superposition compensatoire on élimine de la mesure les composantes superposées des spectres Doppler ($M_{0a}$), qui ne doivent pas être affichées, et

c) le signal de mesure obtenu après la superposition compensatoire est fourni ou reproduit sous forme optique et/ou acoustique.

2. Procédé suivant la revendication 1, caractérisé par le fait qu'on réalise les analyses spectrales dans les différentes plages de fréquences ($\alpha$, $\beta$) en deux emplacements au niveau desquels on obtient des puissances partielles qui diffèrent l'une de l'autre par multiplication par un facteur de dilatation K en ce qui concerne les fréquences centrales ($\omega_1$ et $K \cdot \omega_1$) et les largeurs de bande ($\Delta\omega$ et $K \cdot \Delta\omega$) et qui diffèrent l'une de l'autre par division par ce facteur K, du point de vue des densités de puissance ($A^2$ et $A^2/K$), avec $K = \Omega_3/\Omega_1$, $\Omega_1$ et $\Omega_3$ représentant des fréquences angulaires différentes d'émission dans les plages de fréquences différentes ($\alpha$ et $\beta$).

3. Procédé suivant les revendications 1 et 2, caractérisé par le fait que dans le cas d'un écoulement aller et d'un écoulement retour du fluide en écoulement détectés simultanément, on isole l'un ($|F_b|^2$) des spectres superposés, qui est obtenu dans une direction d'écoulement, qu'en commençant par une valeur marginale (figure 3), pour laquelle au moins la composante de puissance du spectre devant être isolée est nulle dans l'une ($\alpha$) des plages de fréquences, on mesure tout d'abord, selon la méthode compensatoire, la valeur marginale ($M_{0b1}$)ı du spectre devant être isolée à partir de la seconde plage de fréquences ($\beta$) et qu'ensuite on détermine, grâce à une avance pas-à-pas de l'analyse (figure 2) avec une fréquence Doppler variable, d'autres valeurs de différence du spectre isolé en deux emplacements différents de fréquence et qu'on les ajoute successivement à des valeurs déterminées antérieurement (figure 4).

4. Procédé suivant la revendication 3, caractérisé par le fait qu'une analyse spectrale qui se déroule en commençant par une valeur marginale et sur un nombre pouvant être prédéterminé de pas dans une direction, s'accompagne d'une analyse spectrale en sens opposé, qui se poursuit en commençant par l'autre valeur marginale et sur un nombre de pas pouvant être prédéterminé de façon correspondante dans la direction opposée.

5. Procédé suivant la revendication 3 ou 4, caractérisé par le fait qu'on isole le spectre ($|F_a|^2$) pour la direction d'écoulement opposée en mesurant la différence entre le spectre superposé (signal de sortie de FFT1 sur la figure 5) et le spectre ($|F_b|^2$) isolé en premier lieu.

6. Procédé suivant la revendication 3 ou 4, caractérisé par le fait qu'on isole le spectre ($|F_a|^2$) pour la direction d'écoulement opposée en évaluant, à la place des bandes latérales mesurées précédemment, les autres bandes latérales respectives dans les deux plages de fréquences.

7. Procédé suivant l'une des revendications 3 à 6, caractérisé par le fait qu'avant l'exécution d'une analyse des deux spectres superposés obtenus à partir de l'écoulement aller et de l'écoulement retour dans les deux plages de fréquences différentes ($\alpha$, $\beta$) on forme la puissance totale des spectres superposés et qu'on utilise l'information concernant les puissances totales pour rendre égaux les niveaux des signaux Doppler qui proviennent des deux plages de fréquences.

8. Procédé suivant la revendication 7, caractérisé par le fait que l'égalisation des niveaux s'effectue de telle sorte qu'on divise l'une par l'autre les puissances déterminées des spectres complets superposés et qu'on multiplie ensuite le signal Doppler d'un canal par le signal de quotient formé.

9. Procédé suivant l'une des revendications 1 à 8, caractérisé par le fait qu'on effectue l'analyse avec une largeur de bande absolue ($\Delta\omega$, $K \cdot \Delta\omega$), qui correspond à la largeur de bande qui, dans le cas de la fréquence Doppler la plus faible, à laquelle on s'intéresse, porte, conformément à la relation d'imprécision du système Doppler, une information concernant la vitesse d'écoulement la plus faible, à laquelle on s'intéresse de façon correspondante (conformément à la précision de mesure pour la vitesse).

10. Procédé suivant la revendication 9, caractérisé par le fait que pour des fréquences Doppler supérieures auxquelles on s'intéresse, on additionne un nombre de valeurs d'analyse de la largeur de bande absolue ($\Delta\omega$, $K \cdot \Delta\omega$), qui proviennent des plages correspondantes de fréquences Doppler et qui fournissent, dans la somme, la largeur de bande qui contient, pour la fréquence Doppler supérieure à laquelle on s'intéresse et conformément à la relation d'imprécision du système Doppler, une information concernant l'écoulement plus important correspondant.

11. Procédé suivant l'une des revendications 1 à 10, caractérisé par le fait qu'on synthétise rétroactivement, à partir du résultat d'analyse, un signal Doppler dont la fonction temporelle ne correspond en général pas à celle qui est contenue dans le spectre superposé, mais qui possède les mêmes caractéristiques spectrales (spectre de puissance) que cette fonction temporelle.

12. Procédé suivant l'une des revendications 1 à 11, caractérisé par le fait que dans une représentation spectrale, modulée du point de vue de la luminosité, du spectre (fréquence en fonction du temps) sous la forme d'une courbe, on peut introduire une fréquence moyenne ($\bar{f}$) du résultat de l'analyse, éventuellement en même temps que des valeurs de dispersion.

13. Appareil Doppler à impulsions ultrasoniques servant à mesurer et à indiquer un écoulement, pour la mise en oeuvre du procédé suivant la revendication 1, comportant un transducteur électroacoustique (W), un analyseur de fréquences (FFT1, FFT2 ; FFT1 à FFT5) et un dispositif indicateur (32, 33 ; 34) servant à fournir une indication ou un affichage optique et/ou acoustique, caractérisé par le fait que pour réaliser l'analyse spectrale des signaux Doppler arrivant, avant ou après leur démodulation, dans au moins deux plages de fréquences ($\alpha$, $\beta$) différentes et similaires selon les lois de similitudes, il est prévu au moins deux analyseurs spectraux (FFT1, FFT2 ou FFT1 à FFT5), qui possèdent les fonctions de filtre ($G_\alpha$, $G_\beta$) possédant les fréquences centrales variables ($\omega_1$, $K \cdot \omega_1$) et des largeurs de bande passante prédéterminées ($\Delta\omega$, $K \cdot \Delta\omega$), que dans les deux plages de fréquences ($\alpha$, $\beta$), des puissances partielles identiques (($M_{0b2} + M_{0a}$) et ($M_{0b1} + M_{0a}$)) sont éliminées par filtrage respectivement dans le cas de fréquences centrales ($\omega_1$, $K \cdot \omega_1$) modifiées, que ces puissances partielles sont envoyées, de préférence après l'égalisation préalable du niveau, à un circuit soustracteur (D) de manière à former la différence ($M_{0b1} - M_{0b2}$), et qu'il est prévu un circuit additionneur (24, 25) qui additionne successivement les valeurs des différences des puissances partielles à des valeurs déterminées antérieurement, et qui permet d'obtenir le spectre de puissance ($|F_b\alpha|^2$) pour une direction d'écoulement du fluide en écoulement.

14. Appareil suivant la revendication 13, caractérisé par le fait que les analyseurs spectraux sont réalisés de telle sorte qu'il est possible d'effectuer une analyse pas-à-pas en commençant par une valeur marginale.

15. Appareil suivant la revendication 14, caractérisé par le fait que les analyseurs spectraux sont également réalisés de telle sorte qu'il est possible d'effectuer une analyse pas-à-pas simultanément dans deux directions de fréquences opposées, en commençant par les valeurs marginales respectivement opposées des spectres.

16. Appareil suivant l'une des revendications 13 à 15, caractérisé par le fait qu'en aval de chaque récepteur à bande latérale unique (5, 6) pour deux plages de fréquences ($\alpha$, $\beta$) se trouve branché respectivement au moins un analyseur spectral (FFT2, FFT3, ou FFT4, FFT5), auxquels des circuits de compensation (7, 9 ; 8 ; 10 ; 11 ; 17, 18) sont associés pour réaliser la compensation du niveau.

17. Appareil suivant l'une des revendications 13 à 16, caractérisé par le fait que pour déterminer le spectre ($|F_a|^2$) pour la direction d'écoulement opposée, il est prévu un circuit formateur de différence (26, 27) servant à former la différence entre le spectre total (de FFT1) et le spectre ($|F_b|^2$) déjà isolé.

18. Appareil suivant l'une des revendications 15 à 17, caractérisé par le fait que dans le cas d'une analyse pas-à-pas effectuée suivant deux directions de fréquences opposées, il est prévu au moins deux dispositifs formateurs de différence (26, 27).

19. Appareil suivant l'une des revendications 13 à 18, caractérisé par le fait que pour la mise en oeuvre du procédé suivant les revendication 9 et 10, il est prévu un circuit additionneur (29, 30), de préférence un circuit additionneur numérique.

20. Appareil suivant l'une des revendications 13 à 19, pour la mise en oeuvre du procédé suivant la revendication 11, caractérisé par le fait qu'il est prévu un synthétiseur de parasitage (32, 33 ; 35-46).

21. Appareil suivant l'une des revendications 13 à 20 pour la mise en oeuvre du procédé suivant la revendication 12, caractérisé par le fait qu'il est prévu un circuit de calcul (31) servant à former la fréquence moyenne ($\bar{f}$) ainsi que éventuellement la largeur de bande ($\sigma F$).

FIG 1

FIG 2

$|F_{b\alpha}|^2$    $|F_{a\alpha}|^2$    $M_{ob1}$
$M_{oa}$

$|F_{b\beta}|^2$    $|F_{a\beta}|^2$    $M_{ob1}$
$M_{oa}$

$\omega$

$\Delta\omega_K = \frac{2\pi}{\tau} \cdot \frac{K-1}{K}$

$\Delta\omega_K = \frac{2\pi}{\tau} \cdot (K-1)$

FFT 1

$G_\alpha$

$\omega_1$

FFT 2

$G_\beta$

$K\omega_1$

$M_{oa}$

$-$ D $+$

$M_{ob1} + M_{oa}$

FIG 3

$M_{ob1}$

$M_{ob1}{}_{I}$

$\omega_2$

Leistungsdichte

$|F_b|^2$

$(M_{ob1} - M_{ob2})_{II}$

$M_{ob1}{}_{I}$

$\underbrace{\qquad}_{V;IV}$  $\underbrace{\qquad}_{III}$  $\underbrace{\qquad}_{II}$  $\underbrace{\qquad}_{I}$  $\omega_2$

FIG 4

2

FIG 5

FIG 6